# DEMANDE DE BREVET EUROPEEN

(11) **EP 4 570 556 A1**
(43) Date de publication de la demande: **18.06.2025**
(21) Numéro de dépôt: 24219681.4
(22) Date de dépôt: 13.12.2024
(51) Int. Cl.: B60K 35/10, B60K 35/28, B60W 30/14

(54) **DISPOSITIF D' AIDE À LA CONDUITE D'UN VÉHICULE AUTOMOBILE**

(30) Priorité: 15.12.2023 FR 2314320
(71) Demandeur: Ampere SAS, 92100 Boulogne-Billancourt (FR)
(72) Inventeur: DAVINS, Joan, 78084 Guyancourt (FR); DEBORNE, Renaud, 78084 GUYANCOURT (FR); HALLOUIN, Thibault, 78084 GUYANCOURT (FR)
(74) Mandataire: Renault Group

(57) **Abrégé**

L'invention concerne un dispositif (1) d'aide à la conduite d'un véhicule automobile comprenant un groupe motopropulseur, comportant :
- au moins deux premiers blocs logiciels (IA, 1B) distincts adaptés à émettre des consignes de pilotage du groupe motopropulseur pour assurer des fonctions de régulation et/ou de limitation de vitesse du véhicule automobile qui sont différentes,
- un deuxième bloc logiciel (2) adapté à commander l'affichage d'informations sur un écran du véhicule automobile, et
- un troisième bloc logiciel (3) adapté à déterminer une consigne de vitesse (V_{cons}) et à délivrer ladite consigne de vitesse à chaque premier bloc logiciel et au deuxième bloc logiciel.

## Description

### Domaine technique de l'invention

La présente invention concerne de manière générale les véhicules automobiles.

Elle concerne plus particulièrement un dispositif d'aide à la conduite d'un véhicule automobile.

L'invention trouve une application particulièrement avantageuse dans la gestion de la consigne de vitesse d'un tel véhicule.

### Etat de la technique

Dans un souci de sécurisation des véhicules automobiles, on équipe actuellement ces derniers de systèmes d'aide à la conduite.

Parmi ces systèmes, on connait notamment les limitateurs et régulateurs de vitesse.

Un limitateur de vitesse permet au conducteur de fixer une « consigne de vitesse » telle que, lorsqu'il accélère, le véhicule limite automatiquement l'accélération pour que la vitesse du véhicule ne dépasse pas cette consigne.

Un régulateur de vitesse simple permet au conducteur de fixer une « consigne de vitesse » de sorte que le véhicule roule automatiquement à cette vitesse.

Un régulateur de vitesse adaptatif (plus connu sous l'abréviation ACC, de l'anglais « Adaptative Cruise Control ») permet au conducteur de choisir une « consigne de vitesse » à laquelle il souhaite que le véhicule roule autant que possible, le véhicule étant alors commandé de manière qu'il roule à la consigne de vitesse saisie par le conducteur, sauf si un véhicule tiers le précède et roule moins vite. Dans ce cas, le régulateur de vitesse adaptatif calque la vitesse du véhicule sur celle de ce véhicule tiers de façon à garder une distance de sécurité suffisante avec ce dernier.

D'autres limitateurs ou régulateurs de vitesse sont connus. Ainsi, certains permettent de prendre en compte l'environnement ou une cartographie de cet environnement pour ajuster automatiquement la vitesse du véhicule, afin par exemple de freiner le véhicule en entrée de rond-point et de le faire réaccélérer après.

L'ensemble de ces systèmes ont pour point commun d'utiliser une consigne de vitesse sélectionnée par le conducteur.

En pratique, ces systèmes fonctionnent toutefois de façon bien distincte.

Pour cela, chaque système est codé dans une application logicielle qui lui est propre et qui communique avec le système de commande du groupe motopropulseur du véhicule et avec une interface homme machine. En pratique, l'interface homme-machine comporte un écran d'affichage qui est situé dans le champ de vision du conducteur et qui permet au conducteur de savoir si l'une ou l'autre des fonctions est active et quelle est la consigne de vitesse enregistrée.

Chaque application détermine ainsi de son côté trois données qu'elle transmet à l'interface homme-machine, à savoir la consigne de vitesse, l'état du système (actif, en veille ou inactif) et une alerte de survitesse.

Cette architecture logicielle présente plusieurs inconvénients.

Le premier est que chaque application a une gestion de la consigne de vitesse qui est différente, ce qui accroît la complexité et le coût de développement de ces applications.

Le second est que chaque application prévoit des conditions différentes pour modifier la consigne de vitesse, ce qui en rend la gestion peu claire pour le conducteur.

Le troisième est que les applications sont susceptibles d'afficher les consignes de vitesse sous des formes différentes, ce qui encore une fois est source de complexité pour le conducteur.

Le quatrième est qu'en cas de changement de système (lors du passage par exemple de la fonction de limitation à la fonction de régulation), la consigne de vitesse peut changer sans que le conducteur ne le requière ou ne s'en aperçoive, ce qui s'avère peu pratique voire dangereux.

Le cinquième est que les applications n'étant pas nécessairement codées dans le même calculateur, du fait de latences, des problèmes de synchronisation peuvent survenir et générer des instabilités dans l'affichage de la consigne de vitesse.

### Présentation de l'invention

Afin de remédier aux inconvénients précités de l'état de la technique, la présente invention propose de coder autrement les fonctions d'aide à la conduite.

Plus particulièrement, on propose selon l'invention un dispositif d'aide à la conduite d'un véhicule automobile qui est équipé d'un groupe motopropulseur, ce dispositif comportant une mémoire informatique dans laquelle sont stockés :
- au moins deux premiers blocs logiciels distincts adaptés à émettre des consignes de pilotage du groupe motopropulseur pour assurer des fonctions de régulation et/ou de limitation de vitesse du véhicule automobile qui sont différentes,
- un deuxième bloc logiciel adapté à commander l'affichage d'informations sur un écran du véhicule automobile, et
- un troisième bloc logiciel adapté à déterminer une consigne de vitesse et à la délivrer à chaque premier bloc logiciel et au deuxième bloc logiciel.

Ainsi, grâce à l'invention, les premiers blocs logiciels (c'est-à-dire les applications qui assurent les différentes fonctions de limitateur, régulateur...) ne sont plus en charge de la détermination de la consigne de vitesse. Au contraire, le troisième bloc est prévu pour cela : il est ainsi en mesure de déterminer une seule et unique consigne de vitesse valable pour toutes les fonctions, et de la communiquer aux premiers blocs-logiciel.

L'utilisation d'une unique consigne de vitesse pour les différentes fonctions rend l'utilisation du dispositif d'aide à la conduite plus simple et transparente pour le conducteur. Typiquement, la consigne de vitesse présente une valeur qui ne varie plus lorsque la fonction change.

Cette solution assure ainsi une continuité dans l'affichage de la consigne de vitesse tant qu'au moins une fonction utilise cette consigne ou la garde en mémoire.

Cette solution technique est alors plus simple à mettre en oeuvre. En outre, elle fonctionne indépendamment du nombre d'applications (ce qui la rend exploitable sur différentes gammes de véhicule sur lesquelles le nombre de fonctions varie). Elle permet en plus de faciliter le développement de nouvelles applications ou le changement d'architecture du volant du véhicule.

D'autres caractéristiques avantageuses et non limitatives du dispositif d'aide à la conduite conforme à l'invention, prises individuellement ou selon toutes les combinaisons techniquement possibles, sont les suivantes :
- le véhicule automobile comportant un volant sur lequel se trouvent des boutons et des moyens de mesure d'une vitesse courante du véhicule automobile, le troisième bloc logiciel est adapté à recevoir en entrée des signaux d'appui relatifs à l'appui par le conducteur sur lesdits boutons et un signal de vitesse relatif à ladite vitesse courante, et à modifier la consigne de vitesse en fonction des signaux d'appui et du signal de vitesse ;
- cette modification consiste à réinitialiser la consigne de vitesse, l'augmenter ou la réduire, ou lui affecter la vitesse instantanée du véhicule automobile ;
- chaque premier bloc logiciel est adapté à délivrer au troisième bloc logiciel un signal de retour relatif à l'usage qu'il fait de la consigne de vitesse et dans lequel le troisième bloc logiciel est adapté à modifier la consigne de vitesse en fonction des signaux de retour ;
- le signal de retour peut prendre trois valeurs indiquant respectivement que :
   ¤ la consigne de vitesse n'est ni mémorisée, ni utilisée,
   ¤ la consigne de vitesse est mémorisée mais non utilisée,
   ¤ la consigne de vitesse est mémorisée et utilisée ;
- lorsqu'une valeur de consigne de vitesse est définie, le troisième bloc logiciel modifie la consigne de vitesse en fonction des signaux d'appui uniquement si la consigne de vitesse est mémorisée et utilisée ;
- chaque premier bloc logiciel délivre au deuxième bloc logiciel un unique signal, à savoir un signal d'état qui est relatif à un état de fonctionnement du premier bloc logiciel, par exemple choisi entre inactif, en veille et activé ;
- le deuxième bloc logiciel est adapté à afficher :
   * aucune donnée si tous les signaux d'état reçus indiquent que les premiers blocs logiciels sont inactifs,
   * un logo associé à l'un des premiers blocs logiciel si l'un au moins de ces premiers blocs logiciel est en veille ou activé, ledit logo étant associé :
      ¤ si un seul des premiers blocs logiciel est à l'état inactif, à l'autre premier bloc logiciel,
      ¤ si les deux premiers blocs logiciel sont au même état activé ou en veille, au premier bloc logiciel le plus prioritaire, lesdits premiers blocs logiciels présentant un classement par ordre de priorité prédéterminé,
      ¤ si l'un des premiers blocs logiciel est à l'état activé et que l'autre est en veille, au premier bloc logiciel qui est à l'état activé,
   * la consigne de vitesse si l'un au moins des premiers blocs logiciel est à l'état en vielle ou activé, et
   * un premier artifice d'affichage mettant en valeur ladite consigne de vitesse si l'un des premiers blocs logiciel est à l'état activé ;
- il est en outre prévu un moyen qui est distinct des premier, deuxième et troisième blocs logiciel, qui est adapté à détecter une survitesse du véhicule automobile et qui est adapté à délivrer au deuxième bloc logiciel un signal relatif à la survitesse ;
- le deuxième bloc logiciel est adapté à afficher un deuxième artifice d'affichage mettant en valeur ladite consigne de vitesse si l'un des premiers blocs logiciel est à l'état activé et si une survitesse est détectée.

L'invention propose également un véhicule automobile comprenant un groupe motopropulseur, un écran d'affichage et une unité informatique de contrôle dudit groupe motopropulseur, qui comporte un dispositif d'aide à la conduite tel que précité.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

### Description détaillée de l'invention

La description qui va suivre en regard des dessins annexés, donnés à titre d'exemples non limitatifs, fera bien comprendre en quoi consiste l'invention et comment elle peut être réalisée.

Sur les dessins annexés :
[Fig. 1] est une vue schématique en perspective d'une partie d'un volant d'un véhicule automobile ;
[Fig.2] est une représentation d'une image affichée par un écran du véhicule automobile de la [Fig.1] ;
[Fig.3] est une vue schématique des différents blocs logiciels d'un dispositif d'aide à la conduite du véhicule automobile de la [Fig.1], conforme à l'invention ;
[Fig.4] est un schéma illustrant les conditions d'affichage d'un pictogramme sur l'écran de la [Fig.2].

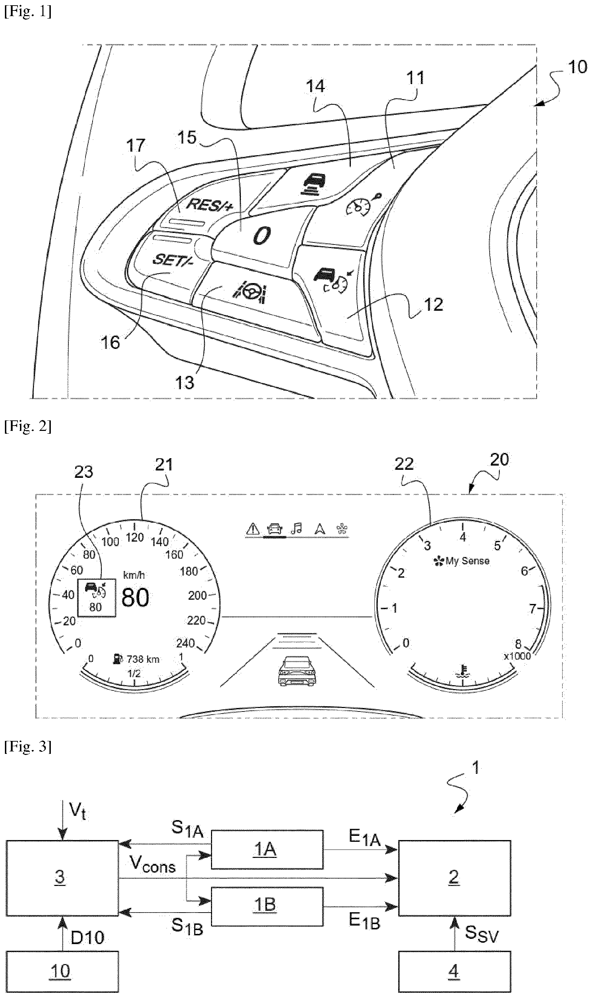

Sur la [Fig.1], on a représenté une partie d'un volant 10 utilisé dans un véhicule automobile conforme à l'invention.

En pratique, il s'agit ici d'un véhicule routier, tel qu'une voiture, un camion ou un car. Il s'agit ici plus précisément d'une voiture comportant classiquement un châssis qui délimite un habitacle pour notamment le conducteur du véhicule, quatre roues dont deux roues avant motrices et directrices, un groupe motopropulseur, un système de direction et un système de freinage.

Ces différents éléments étant bien connus, ils ne seront pas décrits ici en détail.

On pourra seulement préciser que le groupe motopropulseur pourra être indifféremment du type à combustion interne, hybride ou purement électrique. Dans tous les cas, il comportera un actionneur permettant de commander le régime et/ou le couple qu'il développe.

Le système de freinage comportera également un actionneur permettant d'actionner les freins du véhicule.

Le véhicule comporte également une interface Homme-Machine, se présentant ici sous la forme d'un écran d'affichage situé dans le champ de vision du conducteur, par exemple derrière le volant. On a représenté sur la [Fig.2] un exemple d'image 20 que cet écran peut afficher. On y observe sur la partie gauche un compteur de vitesse 21 et sur la partie droite un compte-tour 22.

Le véhicule automobile comporte par ailleurs unité informatique de contrôle (ci-après appelée calculateur), qui comprend en pratique de nombreux systèmes interconnectés.

Ce calculateur comporte des processeurs, différentes mémoires et des interfaces d'échange de données, connectées par exemple à un réseau CAN du véhicule.

Grâce à ces interfaces, le calculateur est adapté à commander les actionneurs précités et à recevoir des informations de capteurs, par exemple d'un RADAR permettant de déterminer la distance entre le véhicule et un éventuel véhicule qui le précèderait, et la vitesse de ce dernier.

Grâce à ses mémoires, le calculateur mémorise une application informatique, constituée de programmes d'ordinateur comprenant des instructions dont l'exécution par les processeurs permet la mise en oeuvre par le calculateur du procédé décrit ci-après.

Le volant 10, tel qu'il est représenté sur la [Fig.1], comporte des moyens permettant au conducteur de communiquer avec le calculateur.

Ces moyens se présentent ici sous la forme de boutons, au nombre de sept.

Trois de ces boutons 11, 12, 13 permettent d'activer des fonctions d'aide à la conduite du véhicule, programmées dans le calculateur. Un quatrième bouton 14 permet de régler un seuil de distance de sécurité à maintenir.

Parmi les fonctions activables par les trois boutons 11, 12, 13, on compte ici deux fonctions de régulation et/ou de limitation de la vitesse (longitudinale) du véhicule automobile.

Ici, il est ainsi prévu, associé au bouton 11, une fonction de limitation de vitesse permettant au conducteur de fixer une consigne de vitesse V_{cons} que le véhicule ne doit pas dépasser.

Il est par ailleurs prévu, associé au bouton 12, une fonction de régulation de vitesse adaptative (plus connu sous l'abréviation ACC, de l'anglais « Adaptative Cruise Control ») qui permet au conducteur de choisir une consigne de vitesse V_{cons} à laquelle il souhaite que le véhicule roule, cette vitesse étant toutefois réduite si un véhicule tiers plus lent précède la voiture.

Ces deux fonctions de limitation et de régulation de vitesse étant connues, elles ne seront pas ici décrites plus en détail. On notera seulement à ce stade qu'elles permettent de piloter le groupe motopropulseur en fonction de la consigne de vitesse sélectionnée par le conducteur.

Dans la suite de cet exposé, on considérera plus spécifiquement ces deux fonctions de limitation et de régulation de vitesse. Mais bien entendu, en variante, le calculateur pourrait être programmé pour mettre en oeuvre des fonctions différentes ou un plus grand nombre de fonctions (par exemple une fonction de régulation simple, une fonction de régulation à basse vitesse dite « stop & go »...).

Les trois autres boutons, qui sont plus précisément associés à l'invention, permettent au conducteur de modifier la consigne de vitesse V_{cons}.

Un bouton central 15, présentant le motif « 0 », permet de réinitialiser la consigne de vitesse V_{cons} (en supprimant sa valeur).

Un bouton inférieur gauche 16, présentant le motif "SET/-", et un bouton supérieur gauche 17, présentant le motif "RES/+", permettent d'affecter une nouvelle valeur à la consigne de vitesse V_{cons} ou de modifier sa valeur.

Comme le montre la [Fig.3], le calculateur 1 comporte plusieurs « blocs logiciels », c'est-à-dire plusieurs applications informatiques distinctes, qui permettent d'exécuter des tâches différentes d'aide à la conduite.

Ces blocs logiciels peuvent tous êtres codés et stockés dans un même circuit informatique (par exemple dans la mémoire d'un même microcontrôleur).

En variante, certains d'entre eux pourraient être codés sur des circuits informatiques différents, ces circuits étant alors adaptés à communiquer ensemble, directement ou via le réseau CAN du véhicule.

On s'intéressera ici à une partie seulement des logiciels, à savoir ceux qui permettent de mettre en oeuvre les fonctions précitées d'aide à la conduite (ici les fonctions de limitateur et régulateur), cette partie étant désignée sous l'appellation « dispositif 1 d'aide à la conduite ».

Ces logiciels sont organisés en blocs distincts qui sont adaptés à communiquer ensemble. Il s'agit donc d'algorithmes (ou d'ensembles de lignes de codes) distincts, pouvant par exemple être compilés de manière indépendante. On notera ici qu'ils sont compilés conjointement.

Il est tout d'abord prévu des premiers blocs-logiciel permettant respectivement de mettre en oeuvre les fonctions précitées d'aide à la conduite.

Il est ainsi prévu ici un bloc-logiciel associé à la fonction de limitation de vitesse, ci-après appelé « application de limitation 1A ». Ce bloc est prévu pour recevoir des données et pour élaborer une consigne de pilotage (en vitesse ou en couple) du groupe motopropulseur.

Il est aussi prévu un bloc-logiciel associé à la fonction de régulation de vitesse, ci-après appelé « application de régulation 1B ». Ce bloc est lui aussi prévu pour recevoir des données et pour élaborer une consigne de pilotage (en vitesse ou en couple) du groupe motopropulseur.

Ces deux premiers blocs-logiciel assurent donc des fonctions différentes, qui ne peuvent être utilisées simultanément pour commander le groupe motopropulseur.

Chaque application de régulation 1B et de limitation 1A peut prendre trois états différents, à savoir un état activé, un état inactif et un état intermédiaire dit de veille.

Une telle application est dite à l'état activé lorsqu'elle a été démarrée par le conducteur qui a appuyé à cet effet sur le bouton 11, 12 correspondant et qu'elle élabore une consigne de pilotage qui est transmise au groupe motopropulseur.

Elle est dite à l'état de veille lorsqu'elle a été démarrée par le conducteur qui a appuyé à cet effet sur le bouton 11, 12 correspondant mais qu'elle n'élabore pas de consigne de pilotage transmise au groupe motopropulseur. Cela peut arriver par exemple après que le conducteur a actionné la pédale de frein, ce qui a interrompu son fonctionnement.

Elle est dite à l'état inactif sinon. C'est notamment le cas après le démarrage du véhicule, tant qu'aucun appui sur le bouton 11, 12 correspondant n'a lieu, ou après un appui sur le bouton 15 du volant.

On notera ici que les applications de régulation 1B et de limitation 1A seront classées selon un ordre de priorité prédéterminé, de la plus prioritaire à la moins prioritaire. Dans le mode de réalisation ici décrit, l'application de régulation 1B est prioritaire sur l'autre application, ce qui signifie que si ces deux applications cherchent à se placer dans le même état, le calculateur ne considérera que celle qui est prioritaire.

Il est prévu un autre bloc-logiciel en charge de l'affichage d'informations sur l'écran du véhicule automobile. Ce bloc logiciel sera ci-après appelé « application d'interfaçage 2 ».

Selon l'invention, il est par ailleurs prévu un bloc-logiciel adapté à déterminer la consigne de vitesse V_{cons} et à la délivrer aux trois blocs précités. Ce bloc logiciel sera ci-après appelé « application d'élaboration de consigne 3 ».

Il est enfin prévu un moyen 4 de détection d'une survitesse du véhicule automobile, qui est adapté à délivrer cette information à l'application d'interfaçage 2, par exemple via le réseau CAN du véhicule.

En pratique, une survitesse est détectée lorsque la vitesse du véhicule est supérieure à la consigne de vitesse et que la pédale d'accélérateur est actionnée par le conducteur.

On peut maintenant décrire comment ces différentes applications fonctionnent et communiquent entre elles.

L'application d'élaboration de consigne 3 est prévu pour recevoir des données D10 relatives à l'appui par le conducteur sur les boutons du volant, un signal Vₜ relatif à la vitesse courante du véhicule automobile, et pour communiquer avec chaque application de régulation 1B et de limitation 1A et avec l'application d'interfaçage 2.

Elle ne reçoit aucune information de l'application d'interfaçage 2 mais reçoit de chaque application de régulation 1B et de limitation 1A un signal d'usage de la consigne de vitesse, noté S_{1A}, S_{1B}, indiquant si la consigne de vitesse V_{cons} est utilisée ou non par cette application.

Ce signal d'usage S_{1A}, S_{1B} peut ici prendre trois valeurs distinctes. Il est ainsi égal à :
¤ 0 si la consigne de vitesse V_{cons} n'est ni mémorisée ni utilisée par l'application considérée,
¤ 1 si la consigne de vitesse V_{cons} n'est pas utilisée par l'application considérée mais est mémorisée,
¤ 2 si la consigne de vitesse V_{cons} est mémorisée et utilisée par l'application considérée.

En pratique, l'application d'élaboration de consigne 3 traite les signaux d'usage S_{1A}, S_{1B} qu'elle reçoit des premières applications (ici des deux applications de régulation 1B et de limitation 1A) de façon conjointe.

Elle génère ainsi un signal global S_{G} sur la base de ces deux signaux d'usage S_{1A}, S_{1B}, qui est ici défini égal à :
¤ 0 si les deux signaux d'usage S_{1A}, S_{1B} sont égaux à 0,
¤ 2 dès que l'un au moins deux signaux d'usage S_{1A}, S_{1B} est égal à 2, et
¤ 1 sinon.

Autrement formulé, le signal global S_{G} prend la valeur 0 si aucune des premières applications n'utilise la consigne de vitesse V_{cons}, la valeur 2 si au moins une des premières applications utilise la consigne de vitesse V_{cons}, et la valeur 1 sinon.

L'application d'élaboration de consigne 3 sera alors en mesure de déterminer la consigne de vitesse V_{cons} en fonction uniquement de ce signal global S_{G}, du signal Vₜ et des données D10 relatives à l'appui par le conducteur sur les boutons du volant.

On peut ici définir en détail comment est déterminée cette consigne de vitesse V_{cons}.

Le premier cas à envisager est celui où le signal global S_{G} est égal à zéro. Dans ce cas où la consigne de vitesse n'est pas ou plus utilisée ni même mémorisée, l'application d'élaboration de consigne 3 n'affecte à la consigne de vitesse V_{cons} aucune valeur (elle est donc vide ou elle prend une valeur prédéterminée signifiant qu'aucune consigne n'est définie, ici la valeur 255).

Le deuxième cas à envisager est celui où le signal global S_{G} est égal à un.

Dans ce cas, la consigne de vitesse est mémorisée par l'une au moins des premières applications, mais elle n'est pas utilisée pour piloter le groupe motopropulseur. Dans ce cas, le conducteur conserve la faculté de modifier la consigne de vitesse.

Ainsi, si un appui sur le bouton inférieur gauche 16 (« SET/- ») est détecté, le calculateur affecte à la consigne de vitesse V_{cons} la valeur courante de la vitesse du véhicule.

Si un appui sur le bouton supérieur gauche 17 (« RES/+ ») est détecté et qu'une valeur de la consigne de vitesse V_{cons} est déjà mémorisée, le calculateur ne modifie par cette valeur.

En revanche, si un appui sur le bouton supérieur gauche 17 (« RES/+ ») est détecté et qu'aucune valeur de la consigne de vitesse V_{cons} n'est mémorisée, le calculateur affecte à la consigne de vitesse V_{cons} la valeur courante de la vitesse du véhicule.

Le troisième cas à envisager est celui où le signal global S_{G} est égal à deux. Dans ce cas, la consigne de vitesse est utilisée par l'une au moins des premières applications pour piloter le groupe motopropulseur.

Dans ce cas, le signal Vₜ et les données D10 sont utilisés pour déterminer la consigne de vitesse V_{cons}.

Ainsi, si un appui sur le bouton inférieur gauche 16 (« SET/- ») est détecté, plusieurs cas sont envisageables.

Si aucune consigne de vitesse V_{cons} n'était définie et que les fonctions de limitation et de régulation étaient désactivées, l'appui sur le bouton inférieur gauche 16 permet d'affecter à la consigne de vitesse V_{cons} la valeur courante de la vitesse du véhicule, puis d'activer la fonction de régulation ou de limitation sélectionnée par le conducteur.

Si une consigne de vitesse V_{cons} était définie mais que les fonctions de limitation et de régulation étaient en veille, l'appui sur le bouton inférieur gauche 16 permet d'affecter à la consigne de vitesse V_{cons} la valeur courante de la vitesse du véhicule, et d'activer la fonction de régulation ou de limitation sélectionnée par le conducteur.

Si l'une des fonctions de limitation et de régulation est activée, l'appui sur ce bouton inférieur gauche 16 modifie la consigne de vitesse V_{cons}. En pratique, cette consigne baisse de 1 (ou 2) km/h si l'appui sur le bouton est court, et de 10 km/h si l'appui est prolongé.

De la même manière, si un appui sur le bouton supérieur gauche 17 (« RES/+ ») est détecté, plusieurs cas sont envisageables.

Si aucune consigne de vitesse V_{cons} n'était définie et que les fonctions de limitation et de régulation étaient désactivées, l'appui sur le bouton supérieur gauche 17 permet d'affecter à la consigne de vitesse V_{cons} la valeur courante de la vitesse du véhicule, et d'activer la fonction de régulation ou de limitation sélectionnée par le conducteur.

Si une consigne de vitesse V_{cons} était définie mais que les fonctions de limitation et de régulation étaient en veille, l'appui sur le bouton supérieur gauche 17 permet de conserver la même consigne de vitesse V_{cons} que celle qui était enregistrée, et d'activer la fonction de régulation ou de limitation sélectionnée par le conducteur.

Si l'une des fonctions de limitation et de régulation est activée, l'appui sur ce bouton 16 modifie la consigne de vitesse V_{cons}. En pratique, cette consigne augmente de 1 (ou 2) km/h si l'appui sur le bouton est court, et de 10 km/h si l'appui est prolongé.

Ainsi l'application d'élaboration de consigne 3 est alors en mesure de déterminer la consigne de vitesse V_{cons}. Elle peut alors transmettre cette consigne aux applications de régulation 1B et de limitation 1A et à l'application d'interfaçage 2.

Chaque application de régulation 1B et de limitation 1A est par ailleurs en mesure de communiquer à cette application d'interfaçage 2 l'état E_{1A}, E_{1B} (activé, inactif ou en veille) dans lequel elle se trouve.

L'application d'interfaçage 2 reçoit donc en résumé la consigne de vitesse V_{cons}, l'état E_{1A}, E_{1B} de chaque application de régulation 1B et de limitation 1A, et un signal de survitesse S_{SV}.

Elle est alors en mesure, sur la base de ces seules informations, d'afficher sur l'écran un pictogramme 23 (voir [Fig.2]) permettant au conducteur de savoir si l'une des fonctions est active, laquelle, quelle est la consigne de vitesse V_{cons}, et si une survitesse est détectée.

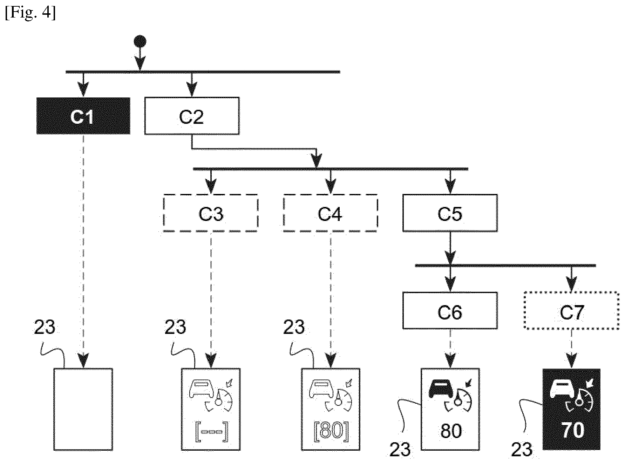

Ainsi, comme le montre la [Fig.4], dans l'éventualité C1 où les deux applications sont inactives, aucun pictogramme 23 n'est affiché. On peut éventuellement prévoir, au centre de l'image 20 affichée sur l'écran, un message indiquant que les applications sont inactives.

Dans l'éventualité C2 où au moins l'une des deux applications n'est pas inactive, trois cas sont envisageables. Avant de décrire ces trois cas, on rappelle que si deux applications sont dans le même état, seule la prioritaire sera considérée.

Dans le premier cas C3, au moins une application est en veille et aucune consigne de vitesse V_{cons} n'est définie. Dans ce cas, le pictogramme 23 comporte un logo indiquant quelle fonction est en veille (ou la fonction prioritaire si les deux fonctions sont en veille), mais il n'affiche aucune valeur de vitesse. La couleur de ce pictogramme 23 peut être le gris.

Dans le deuxième cas C4, au moins une application est en veille et une consigne de vitesse V_{cons} est définie. Dans ce cas, le pictogramme 23 comporte un logo indiquant quelle fonction est en veille (ou la fonction prioritaire si les deux fonctions sont en veille) ainsi que la valeur de la consigne de vitesse V_{cons}. La couleur de ce pictogramme peut être gris.

Dans le troisième cas C5, au moins une application est activée. Dans ce cas, le pictogramme affiche un logo indiquant quelle fonction est activée (ou la fonction prioritaire si les deux fonctions sont activées) ainsi que la valeur de la consigne de vitesse V_{cons}.

Un artifice d'affichage, ici une couleur, permet alors de distinguer deux situations :
- en l'absence de survitesse (cas C6), la couleur du logo et de la consigne de vitesse est verte,
- en cas de survitesse (cas C7), cette couleur est rouge et peut éventuellement clignoter.

Ainsi, la couleur de ce pictogramme 23 dépend ici du signal de survitesse S_{SV}.

On peut maintenant envisager deux exemples pour illustrer le fonctionnement de l'invention.

Dans un premier exemple, le véhicule roule initialement à 50km/h et les applications de limitation 1A et de régulation 1B sont en veille. Aucune consigne de vitesse n'est donc définie.

Puis le conducteur appuie à un instant t1 sur le bouton inférieur gauche 16 (« SET/- »). Le calculateur affecte donc la valeur courante de la vitesse du véhicule à la consigne de vitesse, et les deux applications de limitation 1A et de régulation 1B cherchent à s'activer.

L'application de régulation 1B ayant la priorité sur l'application de limitation 1A, elle est la seule à s'activer. L'application de limitation 1A reste en veille mais garde en mémoire la vitesse de consigne (son signal d'usage S_{1A} est égal à 1).

A un instant t2, un signal extérieur désactive l'application de régulation 1B (typiquement, un freinage d'urgence est mis en oeuvre). Dans ce cas, la consigne de vitesse ne change pas. Dès lors, lorsque l'application de limitation 1A prend automatiquement le relais de l'application de régulation 1B, et cette consigne de vitesse peut être réemployée. De ce fait, la vitesse affichée sur l'écran ne change pas. Cette continuité d'affichage de la consigne de vitesse sur l'écran est donc propre à donner confiance au conducteur dans le système.

Dans un deuxième exemple, le véhicule roule initialement à 50km/h et les applications de limitation 1A et de régulation 1B sont en veille. Aucune consigne de vitesse n'est donc définie.

Puis le conducteur appuie à un instant t10 sur le bouton inférieur gauche 16 (« SET/- »). Le calculateur affecte donc la valeur courante de la vitesse du véhicule à la consigne de vitesse, et seule l'application de régulation 1B cherche à s'activer (on suppose que l'autre application ne peut être activée à ce moment-là).

A un instant t11, un signal extérieur désactive l'application de régulation 1B (typiquement, un freinage d'urgence est mis en oeuvre). Dans ce cas, la valeur de la consigne de vitesse est effacée (ici remise à 255).

A un instant t12, la condition empêchant l'application de limitation 1A de s'activer cesse, mais celle empêchant l'application de régulation 1B demeure.

Alors, lorsque le conducteur réappuie à un instant t4 sur le bouton inférieur gauche 16 (« SET/- »). Le calculateur affecte la valeur courante de la vitesse du véhicule à la consigne de vitesse, et seule l'application de limitation 1A s'active.

Ces deux exemples permettent ainsi d'illustrer comment l'invention fonctionne.

La présente invention n'est nullement limitée au mode de réalisation décrit et représenté, mais l'homme du métier saura y apporter toute variante conforme à l'invention.

Typiquement, on pourrait envisager qu'il soit prévu une autre application, à savoir une application de régulation à basse vitesse (en effet, l'application de régulation du type ACC se désactive sous un seuil de vitesse qui est de l'ordre de 30km/h). Dans cette éventualité, lorsque le signal global S_{G} est égal à deux, que la vitesse du véhicule est sous ce seuil et qu'aucune fonction n'est activée, l'appui sur le bouton inférieur gauche 16 (« SET/- ») permet d'affecter à la consigne de vitesse V_{cons} la valeur courante de la vitesse du véhicule, puis d'activer la fonction de régulation à basse vitesse. Dans les mêmes conditions, l'appui sur le bouton supérieur gauche 17 (« RES/+ ») permet de conserver la consigne de vitesse V_{cons} enregistrée puis d'activer la fonction de régulation à basse vitesse.

Dans le mode de réalisation décrit en référence aux figures, seul un appui sur les boutons du volant permet de modifier la consigne de vitesse. Mais en variante, on pourrait envisager que l'application d'élaboration de consigne 3 puisse modifier cette consigne de façon automatique en fonction du contexte.

Ainsi, à titre d'exemple, si le véhicule est équipé d'une caméra et de moyens de traitement d'images qui permettent de détecter un évènement tel q'une nouvelle limitation de vitesse (ou des travaux, ou la présence d'un rond-point...), cette nouvelle limitation peut être automatiquement affectée à la valeur de la consigne de vitesse. En variante, un appui sur un bouton de validation peut être requis pour valider ce changement de valeur de consigne de vitesse.

## Revendications

1. Dispositif (1) d'aide à la conduite d'un véhicule automobile comprenant un groupe motopropulseur, comportant :
- au moins deux premiers blocs logiciels (1A, 1B) distincts adaptés à émettre des consignes de pilotage du groupe motopropulseur pour assurer des fonctions de régulation et/ou de limitation de vitesse du véhicule automobile qui sont différentes, et
- un deuxième bloc logiciel (2) adapté à commander l'affichage d'informations sur un écran du véhicule automobile,
**caractérisé en ce qu'**il comporte en outre un troisième bloc logiciel (3) adapté à déterminer une consigne de vitesse (V_{cons}) et à délivrer ladite consigne de vitesse (V_{cons}) à chaque premier bloc logiciel (1A, 1B) et au deuxième bloc logiciel (2).

2. Dispositif (1) selon la revendication 1, dans lequel, le véhicule automobile comportant un volant (10) sur lequel se trouvent des boutons (11-17) et des moyens de mesure d'une vitesse courante du véhicule automobile, le troisième bloc logiciel (3) est adapté à recevoir en entrée des signaux d'appui (D1) relatifs à l'appui par le conducteur sur lesdits boutons (11-17) et un signal de vitesse (Vₜ) relatif à ladite vitesse courante, et à modifier la consigne de vitesse (V_{cons}) en fonction des signaux d'appui (D1) et du signal de vitesse (Vₜ).

3. Dispositif (1) selon l'une des revendications 1 et 2, dans lequel chaque premier bloc logiciel (1A, 1B) est adapté à délivrer au troisième bloc logiciel (3) un signal de retour (S_{1A}, S_{1B}) relatif à l'usage qu'il fait de la consigne de vitesse (V_{cons}) et dans lequel le troisième bloc logiciel (3) est adapté à modifier la consigne de vitesse (V_{cons}) en fonction des signaux de retour (S_{1A}, S_{1B}).

4. Dispositif (1) selon la revendication 3, dans lequel le signal de retour (S _{1A}, S_{1B}) peut prendre trois valeurs indiquant respectivement que :
- la consigne de vitesse (V_{cons}) n'est ni mémorisée, ni utilisée,
- la consigne de vitesse (V_{cons}) est mémorisée mais non utilisée,
- la consigne de vitesse (V_{cons}) est mémorisée et utilisée.

5. Dispositif (1) selon les revendications 2 et 4, dans lequel, lorsqu'une valeur de consigne de vitesse (V_{cons}) est définie, le troisième bloc logiciel (3) modifie la consigne de vitesse (V_{cons}) en fonction des signaux d'appui (D1) uniquement si la consigne de vitesse (V_{cons}) est mémorisée et utilisée.

6. Dispositif (1) selon l'une des revendications 1 à 5, dans lequel chaque premier bloc logiciel (1A, 1B) délivre au deuxième bloc logiciel (2) un unique signal d'état (E_{1A}, E_{1B}) qui est relatif à un état de fonctionnement du premier bloc logiciel (1A, 1B), par exemple choisi entre inactif, en veille et activé.

7. Dispositif (1) selon la revendication 6, dans lequel le deuxième bloc logiciel (2) est adapté à afficher :
- aucune donnée si tous les signaux d'état reçus indiquent que les premiers blocs logiciels (1A, 1B) sont inactifs,
- un logo associé à l'un des premiers blocs logiciel (1A, 1B) si l'un au moins de ces premiers blocs logiciel (1A, 1B) est en veille ou activé, ledit logo étant associé :
¤ si seul des premiers blocs logiciel (1A, 1B) est à l'état inactif, à l'autre premier bloc logiciel (1A, 1B),
¤ si les deux premiers blocs logiciel (1A, 1B) sont au même état activé ou en veille, au premier bloc logiciel le plus prioritaire, lesdits premiers blocs logiciels présentant un classement par ordre de priorité prédéterminé,
¤ si l'un des premiers blocs logiciel (1A, 1B) est à l'état activé et que l'autre est en veille, au premier bloc logiciel (1A, 1B) qui est à l'état activé,
- la consigne de vitesse (V_{cons}) si l'un au moins des premiers blocs logiciel (1A, 1B) est à l'état en vielle ou activé, et
- un premier artifice d'affichage mettant en valeur ladite consigne de vitesse (V_{cons}) si l'un des premiers blocs logiciel (1A, 1B) est à l'état activé.

8. Dispositif (1) selon l'une des revendications 1 à 7, dans lequel il est en outre prévu un moyen (4) qui est distinct des premier, deuxième et troisième blocs logiciel (1A, 1B, 2, 3), qui est adapté à détecter une survitesse du véhicule automobile et qui est adapté à délivrer au deuxième bloc logiciel (2) un signal (S_{SV}) relatif à la survitesse.

9. Dispositif (1) selon les revendications 7 et 8, dans lequel le deuxième bloc logiciel (2) est adapté à afficher un deuxième artifice d'affichage mettant en valeur ladite consigne de vitesse (V_{cons}) si l'un des premiers blocs logiciel (1A, 1B) est à l'état activé et si une survitesse est détectée.

10. Véhicule automobile comprenant un groupe motopropulseur et une unité informatique de contrôle dudit groupe motopropulseur, **caractérisé en ce que** ladite unité informatique comporte un dispositif (1) conforme à l'une des revendications 1 à 9.
